# EUROPÄISCHE PATENTSCHRIFT

(11) **EP 1 899 565 B1**
(45) Veröffentlichungstag und Bekanntmachung des Hinweises auf die Patenterteilung: **26.10.2011**
(21) Anmeldenummer: 06763314.9
(22) Anmeldetag: 29.05.2006
(51) Int. Cl.: E05F 15/16, B60N 2/02, B60R 11/00

(54) **ADAPTER UND VERFAHREN ZUM VERBINDEN EINES ELEKTROMOTORS MIT EINER GETRIEBE-SCHNITTSTELLE EINES KAROSSERIETEILS**
ADAPTER AND METHOD FOR CONNECTING AN ELECTRIC MOTOR TO A TRANSMISSION INTERFACE OF A BODYWORK PART
ADAPTATEUR ET PROCEDE POUR RELIER UN MOTEUR ELECTRIQUE AVEC UNE INTERFACE TRANSMISSION D'UNE PARTIE CARROSSERIE

(30) Priorität: 29.06.2005 DE 102005030218
(43) Veröffentlichungstag der Anmeldung: 19.03.2008
(73) Patentinhaber: ROBERT BOSCH GMBH, 70442 Stuttgart (DE)
(72) Erfinder: SCHEER, Dieter, 77830 Buehlertal (DE)
(86) Internationale Anmeldenummer: PCT/EP2006/062655
(87) Internationale Veröffentlichungsnummer: WO 2007/000381

(56) Entgegenhaltungen:
- DE-A1- 10 335 014
- US-A- 3 104 901
- US-A- 3 432 705
- US-A- 4 076 197
- US-A- 4 227 101
- US-A- 6 056 332

## Beschreibung

### Stand der Technik

Die Erfindung betrifft ein Adapterelement, sowie ein Verfahren zum Verbinden eines Elektromotors mit einem Karosserieteil eines Kraftfahrzeugs nach der Gattung der unabhängigen Ansprüche.

Mit der DE 103 35 014 A1 ist eine Getriebe-Antriebseinheit zum Verstellen von beweglichen Teilen im Kraftfahrzeug bekannt geworden, die mittels Anschraubdomen an einem Karosserieteil befestigt wird. Um eine identische Getriebe-Antriebseinheit an verschiedenen kundenspezifischen Anschraubbildern der Karosserie anzubinden, sind die Befestigungsdome verschiebbar an der Getriebe-Antriebseinheit angeordnet, so dass die Anschraubpunkte der Getriebe-Antriebseinheit entsprechend des kundenspezifischen Karosserieteils variiert werden können, ohne das Gehäuse der Antriebseinheit abzuändern. Eine solche Befestigung der Getriebe-Antriebseinheit ist zwar relativ variabel, jedoch müssen bei deren Montage die Anschraubdome in korrekter Weise positioniert werden. Außerdem ist das Anschrauben oder Nieten, sowie das Vorhalten dieser Verbindungsmittel ein relativ aufwendiger Prozess-Schritt.

### Vorteile der Erfindung .

Das erfindungsgemäße Adapterelement und das erfindungsgemäße Verfahren zum Verbinden eines Elektromotors mit der Getriebe-Schnittstelle eines Karosserieteils mit den Merkmalen der unabhängigen Ansprüche haben den Vorteil, dass durch die Verwendung des erfindungsgemäßen Adapteretements ein konkreter Elektromotor für viele unterschiedliche kundenspezifische Getriebe-Schnittstellen im Kraftfahrzeug angebunden werden kann. Weist das ringförmige Adapterelement an seiner Innenseite radiale Ausformungen auf, die mit entsprechenden Gegenelementen des Elektromotors zusammenwirken kann das Gehäuse des Elektromotors für viele verschiedene Getriebeanwendungen immer identisch ausgebildet sein. Dadurch entfällt die aufwendige Konstruktionsänderung und die damit verbundenen Werkzeugkosten für die Herstellung des Motorgehäuses. Dadurch kann beispielsweise der Poltopf des Elektromotors immer eine definierte Gegenausformung aufweisen, die in eine entsprechende, jeweils identische Ausformung der verschiedenen Adapteretemente greift. Erfindungsgemäß weist das Adapteremement zwei schalenförmige Adapterteile auf, die in zusammengesetztem Zustand eine kreisförmige Aussparung bilden, in der das vorzugsweise näherungsweise rohrförmige Gehäuse des Elektromotors aufgenommen wird. Durch diese kreisförmige Aussparung hindurch kann das Antriebsmoment über eine Abtriebselement hindurch auf die Getriebe Schnittstelle übertragen werden. Besonders vorteilhaft ist es, dass die Verbindungsmittel als Hülsen ausgebildet sind, die zur Aufnahme von Befestigungselementen dienen, mit denen das Adapterelement axial an der Getriebe-Schnittstelle des Karosserieteils befestigt wird.

Durch die in den Unteransprüchen ausgeführten Merkmale sind vorteilhafte Weiterbildungen der Vorrichtung und des Verfahrens nach den unabhängigen Ansprüchen möglich. Ist die radiale Ausformung des Adapterelements beispielsweise als radial sich nach innen erstreckender Fortsatz ausgebildet, kann dieser in eine sehr kostengünstig auszuformende Aussparung (beispielsweise mittels Ausstanzen) im Gehäuse des Elektromotors eingreifen. Dadurch wird das Adapterelement axial formschlüssig auf dem Gehäuse des Elektromotors fixiert.

In einer alternativen Ausführung weist das Adapterelement mindestens eine radiale Aussparung auf, in die ein entsprechend am Gehäuse des Elektromotors ausgeformter radialer Fortsatz eingreift Hierbei kann der radiale Fortsatz beispielsweise einstückig am Poltopf angeformt werden, der beispielsweise als Tiefziehteil gefertigt ist.

Weist die radial Ausformung des Adapterelements zusätzlich mit der korrespondierenden Gegenausformung des Gehäuses einen Formschluss in Umfangsrichtung auf, ist das Adapterelement ohne zusätzlichen Prozessschritt gegenüber einer Verdrehung bezüglich des Elektromotors gesichert.

Besonders günstig ist es, die beiden Adapterteile als identische Bauteile herzustellen, da hierbei auf ein zweites Werkzeug zur Herstellung eines zweiten Adapterteils, sowie auf die Lagerhaltung und Bereitstellung eines zusätzlichen Bauteils verzichtet werden kann. Die beiden identischen Adapterteile werden bei der Montage am Elektromotor mit Verbindungsmittel zusammengefügt.

Um die Teilevielfalt zu reduzieren, sind in einer bevorzugten Ausführung zwei oder mehrere Fügeteile mittels Scharnieren miteinander verbunden. Somit kann das einteilige Adapterelement radial um den Elektromotor angelegt und mit einem weiteren Verbindungsmittel geschlossen werden. Insbesondere kann beispielsweise bei zwei Adapterteilen das erste hülsenförmige Verbindungsmittel als Scharnierbolzen vormontiert werden und das zweite Verbindungsmittel bei der Montage des Adapterelements in die entsprechenden Löcher der Fügeteile eingeführt werden.

In einer alternativen Ausführung ist das Adapterelement einstückig als federnder Haltebügel ausgebildet, der mit seinem offenen Ende radial über das Gehäuse des Elektromotors geschoben werden kann. Dabei greifen die beiden federnden Schenkel mit ihren radialen Ausformungen formschlüssig in die entsprechenden Gegenausformungen des Gehäuses.

Bei einer solchen Ausführung weist das Adapterelement zumindest in einer axialen Seite Anschlagsflächen auf, die nach der Montage auf das Gehäuse ein zuvor montiertes Karosserieteil axial gegen das Gehäuse verspannen.

In einer alternativen Ausführung weist das Federelement einen Bereich zwischen den federnden Schenkeln auf, an dem das Federelement mittels Befestigungselementen axial an der Getriebe-Schnittstelle befestigbar ist.

Das Adapterelement eignet sich besonders für eine erfindungsgemäße Getriebe-Antriebseinheit, bei der ein Elektromotor ein standardisiertes Gehäuse mit einer gleich bleibend ausgebildeten Geometrie (Gegenausformungen) aufweist, die mit den gleich bleibend ausgebildeten radialen Ausformungen des Adapterelements zusammenwirkt. Die Anbindung des Adapterelements zur Getriebe-Schnittstelle ist dabei jeweils kundenspezifisch ausgebildet, um mit unterschiedlichen, kundenspezifischen Getriebe-Schnittstellen eines Karosserieteils verbunden werden zu können. Eine solche Adapterlösung der erfindungsgemäßen Getriebe-Antriebseinheit kann beispielsweise auch als Übergangslösung verwendet werden, solange an den karosserieseitigen Kunden-Schnittstellen noch keine einheitliche Verbindungsgeometrie ausgebildet ist. Danach könnten die radialen Ausformungen des Adapterelements direkt an der Getriebe-Schnittstelle des Karosserieteils ausgebildet werden, wodurch langfristig auf das Adapterelement verzichtet werden könnte.

Bei dem erfindungsgemäßen Verfahren kann das Adapterelement auf sehr einfach Weise radial auf das Gehäuse des Elektromotors montiert werden und anschließend das Adapterelement axial an die Getriebe-Schnittstelle angeflanscht werden. Hierdurch kann der kundenseitige axiale Montageprozess auch bei unterschiedlichen Ausformungen des Elektromotor-Gehäuses vereinheitlicht werden. Durch die Ausbildung der Verbindungsmittel als Aufnahmen für die Befestigungselemente entfällt vorteilhaft die separate Anformung oder Montage von Aufnahmen.

Bei einem Verfahren zur Anbindung des Elektromotors an das Karosserieteil, das das Verständnis der Erfindung näher erläutert, wird letzteres zuerst axial an das Gehäuse angelegt und anschließend das als Federelement ausgebildete Adapterelements radial auf das Gehäuse aufgeschoben. Hierbei greifen die am Adapterelement ausgebildeten Ausformungen radial in entsprechende Gegenausformung des Gehäuses, wodurch ein axialer Formschluss zwischen dem Adapterelement und dem Gehäuse gebildet wird. Dadurch wird das Karosserieteil über eine axiale Anschlagsfläche des Adapterelements axial gegen das Gehäuse verspannt.

### Zeichnungen

In den Zeichnungen sind verschiedene Ausführungsbeispiele des erfindungsgemäßen Adapterelements der Getriebe-Antriebeseinheit dargestellt und in der nachfolgenden Beschreibung näher erläutert. Es zeigen
Figur 1 eine Ansicht eines zweiteiligen Adapterelements, das auf dem Elektromotor vormontiert ist,
Figur 2 das gleiche Ausführungsbeispiel wie Figur 1, bei dem schematisch unterschiedliche radiale Ausformungen dargestellt sind,
Figur 3 eine Darstellung eines scharnierförmigen Adapterelements gemäß Figur 1 vor der Montage auf den Elektromotor, und
Figur 4 ein Beispiel, welches das Verständnis der Erfindung erleichtert, jedoch nicht ein Ausführungsbeispiel der Erfindung darstellt.

### Beschreibung der Ausführungsbeispiele

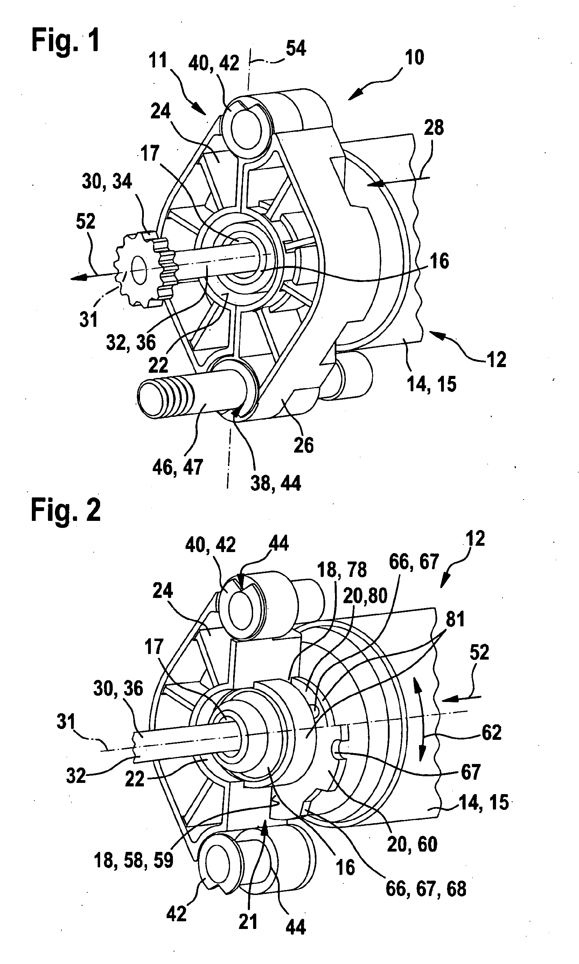

In Figur 1 ist ein Adapterelement 10 dargestellt, das auf einem Gehäuse 14 eines Elektromotors 12 montiert ist. Das Gehäuse 14 ist beispielsweise als Polgehäuse 15, insbesondere als Tiefziehteil aus Metall gefertigt. Das Gehäuse 14 weist an einem axialen Ende 16 eine radiale Gegenausformung 20 auf, in die formschlüssig eine radiale Ausformung 18 eingreift, die an einer Innenfläche 22 des Adapterelements 10 angeformt ist. Wie ebenfalls in Figur 2 sichtbar, weist das Adapterelement 10 zwei Adapterteile 24, 26 auf, die beide schalenförmig ausgebildet sind. Werden diese beiden Fügeteile 24, 26 in radialer Richtung 28 zusammengefügt, bildet die Innenfläche 22 eine kreisförmige Aussparung, in die das Ende 16 des Gehäuses 14, bzw. ein aus diesem ragenden Abtriebselement 30, eingelegt ist. Das Abtriebselement 30 ist auf einer Abtriebsachse 31 angeordnet, die sich in axialer Richtung 52 erstreckt, und ist beispielsweise als Abtriebswelle 32 mit einem darauf angeordneten Abtriebsritzel 34 ausgebildet. Alternativ kann auch eine flexible Welle 36 in eine Öffnung 17 des Gehäuses 14 des Elektromotors 12 eingreifen. Die beiden Adapterteile 24 und 26 sind mit Verbindungselementen 40 miteinander verbunden. Die Verbindungselemente 40 sind hier als Hülsen 42 ausgebildet, die in entsprechende Löcher 44 der beiden Adapterteile 24, 26 eingeschoben werden. Dabei umschließt das Adapterelement 10 in montiertem Zustand das näherungsweise rohrförmige Gehäuse 14 vollständig. Die radialen Ausformungen 18 bilden mit den Gegenausformungen 20 des Gehäuses 14 einen axialen Formschluss 21, so dass das zusammengefügte Adapterelement 10 fest auf dem Elektromotor 12 fixiert ist. In die hülsenförmige Verbindungselemente 40, 42 können Befestigungsmittel 46 eingeführt werden, mittels derer das Adapterelement 10 in axialer Richtung 52 an einer nicht näher dargestellten Getriebe-Schnittstelle 48 eines Kraftfahrzeugs befestigt werden kann. Die Befestigungsmittel 46 sind beispielsweise als Schrauben 47 oder Nieten ausgebildet, die in den Verbindungselementen 40 aufgenommen werden, und in axialer Richtung 52 an einem Karosserieteil 50 der Getriebeschnittstelle 48 entsprechend befestigt werden. In Figur 1 sind die beiden Adapterteile 24 und 26 identisch ausgebildet, so dass diese symmetrisch senkrecht zu einer Trennebene 54 zwischen den beiden Adapterteilen 24 und 26 sind. Die Adapterteile 24, 26 sind als Kunststorf-Spritzgussteile ausgebildet und mittels Hülsen 42 aus Metall miteinander verbunden. Dadurch wird eine formstabile, verschleißfeste Aufnahme 38 für die Befestigungsmittel 46 geschaffen.

In Figur 2 ist zur Veranschaulichung lediglich ein Adapterteil 24 und schematisch zwei unterschiedliche Formschlüsse 21 mit dem Gehäuse 14 dargestellt. In der unteren Bildhälfte weist das Adapterelement 10 an seiner Innenfläche 22 als radiale Ausformung 18 eine Aussparung 58 auf, die als umlaufende, radiale Nut 59 ausgebildet ist. In diese radiale Aussparung 58 greift ein radialer Steg 60 als Gegenausformung 20 des Gehäuses, der sich radial nach außen erstreckt. In diesem Ausführungsbeispiel ist sowohl die radiale Aussparung 58 als auch der radiale Steg 60 umlaufend über den gesamten Umfang 62 ausgebildet. In alternativen Ausführungen, können sich die Ausformungen 18 und die entsprechende Gegenausformung 20 auch auf bestimmte Winkelbereiche beschränken. Auf diese Weise wird auch ein Formschluss 66 bezüglich der Umfangsrichtung 62 realisiert, der eine Drehverriegelung 67 des Adapters 10 bezüglich des Elektromotors 12 darstellt. In Figur 2 ist die Drehverriegelung 67, 66 durch die radialen Einschnitte 68 im radialen Steg 60 des Gehäuses 14, bzw. in den korrespondierenden radialen Aussparungen 58 des Adapterelements 10 ausgebildet.

In der oberen Bildhälfte ist eine alternative Ausführung des Adapterelements 10 dargestellt, das als radiale Ausformung 18 ein sich radial nach innen erstreckenden Steg 78 aufweist, der in eine radiale Gegenausformung 20 des Gehäuses 14 eingreift, die als korrespondierende, umlaufende Nut 80 ausgebildet ist. Eine solche Nut 80 kann beispielsweise aus einer Wand 81 des Gehäuses 14 ausgeschnitten - insbesondere ausgestanzt -, oder in das Gehäuse 14 eingedrückt sein. Innerhalb der radialen Nut 80 ist wiederum ein Formschluss 66 bezüglich der Umfangsrichtung 62 ausgebildet, der eine Verdrehung des Adapterelements 10 gegenüber dem Gehäuse 14 verhindert. Bei dieser Ausführung weist das Gehäuse 14 an seinem Ende 16 die axiale Öffnung 17 auf, in die als Abtriebselement 30 beispielsweise eine Flexwelle 36 formschlüssig in die Abtriebswelle 32 eingreift.

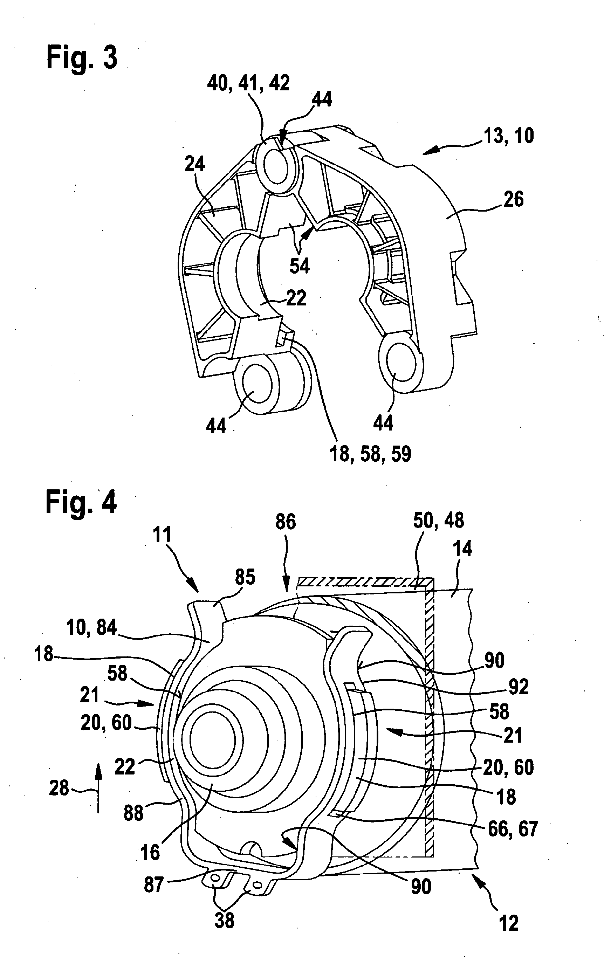

In Figur 3 ist das Adapterelement 10 aus Figur 1 vor dessen Montage auf den Elektromotor 10 dargestellt, wobei die zwei halbschalenförmigen Fügeteile 24 und 26 mittels eines Verbindungsmittels 40 jeweils an einem Ende scharnierartig miteinander verbunden sind. Dabei wirkt das erste Verbindungsmittel 40 als Scharnierbolzen 41, auf dem die beiden Adapterteile 24 und 26 drehbar gegeneinander gelagert sind. Der Scharnierbolzen 41 ist dabei beispielsweise wie in Figur 1 und 2 als Hülse 42 ausgebildet, die in den Löchern 44 der Adapterteile 24, 26 eingefügt ist. Zur Montage wird dieses einteilige Adapterelement 10 wie eine Manschette 13 radial über die radialen Gegenausformungen 20, 60 des Gehäuses 14 geschoben, so dass diese in die radialen Aussparung 18, 58 des Adapterelements 10 eingreifen. Danach wird die Manschette 13 3 verschlossen, indem ein zweites Verbindungselement 40 in die Fügeteile 24, 26 eingeführt wird. Dadurch ist das Adapterelement 10, das beispielsweise aus zwei identischen Fügeteilen 24, 26 besteht, fest auf dem Elektromotor 12 fixiert.

In Figur 4 ist das Adapterelement 10 als einteiliger Haltebügel 84 ausgebildet, der beispielsweise aus Federstahl 85 hergestellt ist. Das Adapterelement 10 ist U-förmig, mit einem offenen Ende 86 ausgebildet, mit dem das Adapterelement 10 in radialer Richtung 28 auf das Gehäuse 24 aufgeschoben wird. Der Haltebügel 84 weist zwei federnde Schenkel 88 auf, die nach der radialen Montage radial am Gehäuse 14 federnd anliegen. Als radiale Ausformungen 18 sind am Adapterelement 10 radiale Aussparungen 58 ausgeschnitten, in die die radialen Stege 60 als Gegenausformung 20 des Gehäuses 14 eingreifen. An dem Adapterelement 10 sind wiederum einteilig mit diesem an einem bügelförmigen Bereich 87 zwischen den beiden Schenkeln 88 Aufnahmen 38 für Befestigungselemente 46 angeformt, mit denen der auf dem Elektromotor 12 fixierte Adapter 10 an der Getriebe-Schnittstelle 48 befestigt werden kann.

In einer Variation des Ausführungsbeispiels weist der Haltebügel 84 axiale Anschlagsflächen 90 auf, die ein zuvor axial montiertes Karosserieteil 50 axial gegen einen weiteren Anschlag 92 des Gehäuses 14 pressen. Bei dieser Variante wird das Karosserieteil 50 mit der Getriebe-Schnittstelle 48 zuerst auf das Gehäuse 14 des Elektromotors 12 aufgeschoben, derart, dass das Karosserieteil 50 axial zwischen der Gegenausformung 20 und dem Anschlag 92 des Gehäuses 14 liegt. Anschließend wird das Adapterelement 10 in radialer Richtung 28 auf das Gehäuse 14 aufgeschoben, wobei die radialen Ausformungen 18 des Haltebügels 84 in die entsprechenden Gegenausformungen 20 des Gehäuses 14 eingreifen. Bei der radialen Montage des als Haltebügel 84 ausgebildeten Adapterelements 10 wird das Karosserieteil 50 durch die Anschlagsfläche 90 des Adapterelements 10 gegen einen entsprechenden Anschlag 92 des Elektromotors 12 verspannt, wodurch das Karosserieteil 50 sicher mit dem Elektromotor 12 verbunden wird. Am Karosserieteil 50 ist dabei die Getriebe-Schnittstelle 48 derart angeordnet, dass das Abtriebselement 30 des Elektromotors 12 mit dem kundenseitigen Getriebe der Getriebe-Schnittstelle 48 als Getriebe-Antriebseinheit 11 verbunden ist.

In einer alternativen Ausführung ist der Haltebügel 84 anstelle der blattfederartigen Schenkel 88 mit drahtförmigen Schenkeln ausgebildet. Dabei bilden diese drahtförmigen Schenkel gleichzeitig radiale Ausformungen 18 die den radialen Stegen 78 entsprechen und in eine korrespondierende Nut 80, bzw. Aussparung 80 des Gehäuses 10 eingreifen. Die drahtförmigen Schenkel bilden dabei ebenfalls eine axiale Anschlagsfläche 90, die das Karosserieteil 50 gegen das Gehäuse 14 presst.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung der radialen Ausformungen 18 mit den entsprechenden Gegenausformungen 20 beliebig variiert werden; ebenso der an diesen Ausformungen 18 und Gegenausformungen 20 ausgebildete Formschluss 66 bezüglich der Umfangsrichtung 62 (Drehverriegelung 67). Sowohl das zweiteilige, als auch das einteilige Adapterelement 10 wird jeweils in radialer Richtung 28 auf die entsprechende Gegenausformung 20 des Gehäuses 14 montiert. Die Anbindung des Adapterelements 10 in axialer Richtung 52 kann mit vielerlei Verbindungstechniken nach dem Stand der Technik ausgeführt werden. Dabei können die Befestigungsmittel auch einteilig mit dem Adapterelement 10 ausgebildet sein. Bevorzugt wird das erfindungsgemäße Adapterelement 10 für die Anbindung von Sitz-Verstellantrieben 12 an die Verstellmechanik 50 verwendet, kann aber auch für andere Verstellantriebe im Kraftfahrzeug eingesetzt werden.

## Patentansprüche

1. Adapterelement (10) zum Verbinden eines ein Gehäuse (14, 15) aufweisenden Elektromotors (12) mit einer Getriebe-Schnittstelle (48) eines Karosserieteils (50) im Kraftfahrzeug, wobei das Adapterelement (10) ringförmig ausgebildet ist und radiale Ausformungen (18, 58, 78) aufweist, die radial in entsprechende Gegenausformungen (20, 60, 80) des Gehäuses (14, 15) eingreifbar sind, derart, dass das Adapterelement (10) das Gehäuse (14, 15) um eine Abtriebsachse (31) umschließt und formschlüssig gegenüber dem Gehäuse (14, 15) axial fixiert ist, und das Adapterelement (10) Mittel (44, 38, 42, 46) zur axialen Anbindung an die Getriebe-Schnittstelle (48) aufweist, **dadurch gekennzeichnet, dass** das Adapterelement (10) zwei halbkreisförmige Fügeteile (24, 26) aufweist, die nach der radialen Montage auf das Gehäuse (14,15) mittels zwei Verbindungselementen (40, 42) zusammenfügbar sind, wobei die Verbindungselemente (40, 42) als separate, hülsenförmige Verbindungsmittel (42) ausgebildet sind.

2. Adapterelement (10) nach Anspruch 1, **dadurch gekennzeichnet, dass** die radialen Ausformungen (18, 58, 78) des Adapterelements (10) als radialer Steg (78) ausgebildet sind, der sich radial nach innen erstreckt und in eine korrespondierende radiale Nut (80) des Gehäuses (14, 15) eingreifbar ist.

3. Adapterelement (10) nach einem der Ansprüche 1 oder 2, **dadurch gekennzeichnet, dass** die radialen Ausformungen (18, 58, 78) des Adapterelements (10) als radiale Aussparung (58, 59) ausgebildet ist, in die ein sich radial nach außen erstreckender Steg (60) des Gehäuses (14, 15) eingreifbar ist.

4. Adapterelement (10) nach einem der vorhergehenden Ansprüche, **dadurch gekennzeichnet, dass** die radialen Ausformungen (18, 58, 78) des Adapterelements (10) bezüglich seiner Umfangsrichtung (62) ein Innenprofil (68) aufweisen, das nach der radialen Montage auf das Gehäuse (14, 15) eine formschlüssige Drehverriegelung (66, 67) mit einem entsprechenden Gegenprofil (68) des Gehäuses (14, 15) bildet.

5. Adapterelement (10) nach einem der vorhergehenden Ansprüche, **dadurch gekennzeichnet, dass** die Fügeteile (24, 26) als Kunststoff-Spritzgussteile ausgebildet sind.

6. Adapterelement (10) nach einem der vorhergehenden Ansprüche, **dadurch gekennzeichnet, dass** die beiden Fügeteile (24, 26) identisch ausgebildet sind.

7. Adapterelement (10) nach einem der vorhergehenden Ansprüche, **dadurch gekennzeichnet, dass** die halbkreisförmigen Fügeteile (24, 26) scharnierartig miteinander verbunden sind, insbesondere mittels der hülsenförmigen Verbindungselemente (40, 42).

8. Adapterelement (10) nach einem der vorhergehenden Ansprüche, **dadurch gekennzeichnet, dass** die Verbindungsmittel (40, 42) als Aufnahmen (38) für Befestigungselemente (46) für die axiale Montage an die Getriebe-Schnittstelle (48) ausgebildet sind.

9. Getriebe-Antriebseinheit (11) mit einem Elektromotor (12) der ein Gehäuse (14) - insbesondere ein Polgehäuse (15) - aufweist, das mittels eines Adapterelements (10) nach einem der vorherigen Ansprüche an einer Getriebe-Schnittstelle (48) eines Karosserieteils (50) befestigt ist.

10. Verfahren zum Verbinden eines Elektromotors (12) mittels eines Adapterelements (10) mit einer Getriebe-Schnittstelle (48) eines Karosserieteils (50), nach einem der vorherigen Ansprüche, **gekennzeichnet durch** folgende Schritte:
- das Adapterelement (10) wird radial auf den Elektromotor (12) montiert, derart, dass die radialen Ausformungen (18, 58, 78) des Adapterelements (10) in entsprechende Gegenausformungen (20, 60, 80) des Elektromotors (12) greifen und einen axialen Formschluss (21) bilden,
- das Adapterelement (10) wird axial gegen die Getriebe-Schnittstelle (48) des Karosserieteils (50) angelegt, derart, dass ein Abtriebselement (30, 34, 36) des Elektromotors (12) **durch** das ringförmige Adapterelement (10) hindurch in die Getriebe-Schnittstelle (48) eingreift,
- das Adapterelement (10) wird mit Befestigungsmitteln (46), die in die Aufnahmen (44, 38) des Adapterelements (10) eingreifen, am Karosserieteil (50) fixiert.

## Claims

1. Adapter element (10) for connecting an electric motor (12), which has a housing (14, 15), to a gearing interface (48) of a body part (50) in a motor vehicle, wherein the adapter element (10) is of annular design and has radial structural features (18, 58, 78) which can be engaged radially in corresponding counterpart structural features (20, 60, 80) of the housing (14, 15) in such a way that the adapter element (10) encloses the housing (14, 15) about an output axis (31) and is fixed axially with respect to the housing (14, 15) in a form-fitting manner and the adapter element (10) has means (44, 38, 42, 46) for axial attachment to the gearing interface (48), **characterized in that** the adapter element (10) comprises two semicircular joining parts (24, 26) which, after radial mounting onto the housing (14, 15), can be joined together by means of two connecting elements (40, 42), wherein the connecting elements (40, 42) are designed as separate, sleeve-shaped connecting means (42).

2. Adapter element (10) according to Claim 1, **characterized in that** the radial structural features (18, 58, 78) of the adapter element (10) are designed as a radial rib (78) which extends radially inwardly and can be engaged in a corresponding radial groove (80) of the housing (14, 15).

3. Adapter element (10) according to either of Claims 1 and 2, **characterized in that** the radial structural features (18, 58, 78) of the adapter element (10) are designed as a radial cutout (58, 59) in which a radially outwardly extending rib (60) of the housing (14, 15) can be engaged.

4. Adapter element (10) according to one of the preceding claims, **characterized in that** the radial structural features (18, 58, 78) of the adapter element (10) have, with respect to its circumferential direction (62), an inner profile (68) which, after radial mounting onto the housing (14, 15), forms a form-fitting rotary locking arrangement (66, 67) with a corresponding counterpart profile (68) of the housing (14, 15).

5. Adapter element (10) according to one of the preceding claims, **characterized in that** the joining parts (24, 26) are designed as plastic injection-moulded parts.

6. Adapter element (10) according to one of the preceding claims, **characterized in that** the two joining parts (24, 26) have an identical design.

7. Adapter element (10) according to one of the preceding claims, **characterized in that** the semicircular joining parts (24, 26) are connected to one another in a hinge-like manner, in particular by means of the sleeve-shaped connecting elements (40, 42).

8. Adapter element (10) according to one of the preceding claims, **characterized in that** the connecting means (40, 42) are designed as receptacles (38) for fastening elements (46) for axial mounting onto the gearing interface (48).

9. Gearing-drive unit (11) with an electric motor (12) which has a housing (14) - in particular a pole housing (15) - which is fastened by means of an adapter element (10) according to one of the preceding claims to a gearing interface (48) of a body part (50).

10. Method for connecting an electric motor (12) by means of an adapter element (10) to a gearing interface (48) of a body part (50), according to one of the preceding claims, **characterized by** the following steps:
- the adapter element (10) is mounted radially onto the electric motor (12) in such a way that the radial structural features (18, 58, 78) of the adapter element (10) engage in corresponding counterpart structural features (20, 60, 80) of the electric motor (12) and form an axial form fit (21),
- the adapter element (10) is placed axially against the gearing interface (48) of the body part (50) in such a way that an output element (30, 34, 36) of the electric motor (12) engages through the annular adapter element (10) into the gearing interface (48), and
- the adapter element (10) is fixed to the body part (50) by fastening means (46) which engage in the receptacles (44, 38) of the adapter element (10).

## Revendications

1. Elément adaptateur (10) pour relier un moteur électrique (12) présentant un boîtier (14, 15) à une interface de transmission (48) d'une pièce de carrosserie (50) dans un véhicule automobile, l'élément adaptateur (10) étant réalisé sous forme annulaire et présentant des formations radiales (18, 58, 78) qui peuvent s'engager radialement dans des formations conjuguées correspondantes (20, 60, 80) du boîtier (14, 15) de telle sorte que l'élément adaptateur (10) entoure le boîtier (14, 15) autour d'un axe de prise de force (31) et soit fixé axialement par engagement positif par rapport au boîtier (14, 15), et l'élément adaptateur (10) présentant des moyens (44, 38, 42, 46) pour la liaison axiale à l'interface de transmission (48), **caractérisé en ce que** l'élément adaptateur (10) présente deux parties d'assemblage (24, 26) de forme semi-circulaire qui, après le montage radial sur le boîtier (14, 15) peuvent être assemblées l'une à l'autre au moyen de deux éléments de connexion (40, 42), les éléments de connexion (40, 42) étant réalisés sous forme de moyens de connexion séparés (42) en forme de douille.

2. Elément adaptateur (10) selon la revendication 1, **caractérisé en ce que** les formations radiales (18, 58, 78) de l'élément adaptateur (10) sont réalisées sous forme de nervure radiale (78) qui s'étend radialement vers l'intérieur et qui peut être engagée dans une rainure radiale correspondante (80) du boîtier (14, 15).

3. Elément adaptateur (10) selon l'une quelconque des revendications 1 ou 2, **caractérisé en ce que** les formations radiales (18, 58, 78) de l'élément adaptateur (10) sont réalisées sous forme d'évidement radial (58, 59), dans lequel peut s'engager une nervure (60) du boîtier (14, 15) s'étendant radialement vers l'extérieur.

4. Elément adaptateur (10) selon l'une quelconque des revendications précédentes, **caractérisé en ce que** les formations radiales (18, 58, 78) de l'élément adaptateur (10) présentent, par rapport à sa direction périphérique (62), un profil interne (68) qui, après le montage radial sur le boîtier (14, 15), présente un verrouillage rotatif par engagement positif (66, 67) avec un profil conjugué correspondant (68) du boîtier (14, 15).

5. Elément adaptateur (10) selon l'une quelconque des revendications précédentes, **caractérisé en ce que** les parties d'assemblage (24, 26) sont réalisées sous forme de pièces moulées par injection de plastique.

6. Elément adaptateur (10) selon l'une quelconque des revendications précédentes, **caractérisé en ce que** les deux parties d'assemblage (24, 26) sont réalisées de manière identique.

7. Elément adaptateur (10) selon l'une quelconque des revendications précédentes, **caractérisé en ce que** les pièces d'assemblage (24, 26) de forme semi-circulaire sont connectées l'une à l'autre comme une charnière, notamment au moyen des éléments de connexion (40, 42) en forme de douille.

8. Elément adaptateur (10) selon l'une quelconque des revendications précédentes, **caractérisé en ce que** les moyens de connexion (40, 42) sont réalisés sous forme de logements (38) pour des éléments de fixation (46) pour le montage axial sur l'interface de transmission (48).

9. Unité d'entraînement de transmission (11) comprenant un moteur électrique (12) qui présente un boîtier (14) - notamment un boîtier de stator (15) - qui est fixé au moyen d'un élément adaptateur (10) selon l'une quelconque des revendications précédentes à une interface de transmission (48) d'une pièce de carrosserie (50).

10. Procédé pour relier un moteur électrique (12) au moyen d'un élément adaptateur (10) à une interface de transmission (48) d'une pièce de carrosserie (50), selon l'une quelconque des revendications précédentes, **caractérisé par** les étapes suivantes :
- l'élément adaptateur (10) est monté radialement sur le moteur électrique (12) de telle sorte que les formations radiales (18, 58, 78) de l'élément adaptateur (10) viennent en prise dans des formations conjuguées correspondantes (20, 60, 80) du moteur électrique (12) et forment un engagement positif axial (21),
- l'élément adaptateur (10) est appliqué axialement contre l'interface de transmission (48) de la pièce de carrosserie (50), de telle sorte qu'un élément de prise de force (30, 34, 36) du moteur électrique (12) vienne en prise à travers l'élément adaptateur de forme annulaire (10) dans l'interface de transmission (48),
- l'élément adaptateur (10) est fixé à la pièce de carrosserie (50) avec des moyens de fixation (46) qui viennent en prise dans les logements (44, 38) de l'élément adaptateur (10).
